# EUROPÄISCHE PATENTANMELDUNG

(11) **EP 1 380 923 A2**
(43) Veröffentlichungstag der Anmeldung: **14.01.2004**
(21) Anmeldenummer: 03010695.9
(22) Anmeldetag: 13.05.2003
(51) Int. Cl.: G06F 1/18, G06F 1/20

(54) **Aufbaukonzept für einen Tower-PC**

(30) Priorität: 31.05.2002 DE 10224274
(71) Anmelder: Fujitsu Siemens Computers GmbH, 81739 München (DE)
(72) Erfinder: Schmid, Michael, 89407 Dillingen (DE)
(74) Vertreter: Epping Hermann & Fischer

(57) **Zusammenfassung**

Die Erfindung betrifft ein Aufbaukonzept für Bauteile in einem Computergehäuse (7) zur Optimierung von Raumausnutzung und Kühlung.

## Beschreibung

Die Erfindung betrifft ein Aufbaukonzept für einen Tower-PC mit einem Motherboard, einem Mikroprozessor, Steckkarten, einem Einbaukäfig für 3 1/2"-Laufwerke, einem Einbaukäfig für 5 1/4"-Laufwerke und einer Stromversorgung in einem Computergehäuse.

Der Erfindung liegt die Aufgabe zugrunde, den Mikroprozessor, die Laufwerke und die Steckkarten derart anzuordnen, daß eine maximale Ausnutzung des Innenvolumens bei optimierten Außenabmaßen erzielt wird.

Die Aufgabe wird erfindungsgemäß dadurch gelöst, daß der Einbaukäfig für die 3 1/2"-Laufwerke unter dem Einbaukäfig für die 5 1/4"-Laufwerke quer zum oberen Einbaukäfig angeordnet ist.

Da die 3 1/2"-Laufwerke quer angeordnet sind, wird das Innenvolumen des Computergehäuses besser ausgenutzt. Die 3 1/2"-Laufwerke sind so lang, wie die 5 1/4"-Laufwerke breit sind und so wird im wesentlichen die ganze Breite des Computergehäuses genutzt.

Außerdem können die 3 1/2"-Laufwerke durch diese Anordnung bei abgenommener Seitenhaube leicht eingebaut oder ausgewechselt werden.

Eine verbesserte Kühlung der Bauteile wird erreicht, indem an dem Computergehäuse an der Frontseite ein Lüftungsgitter und an der Rückseite neben einem I/O-Feld ein Lüftungsgitter ausgebildet ist, wobei das Lüftungsgitter an der Frontseite auf gleicher Höhe wie die 3 1/2"-Laufwerke angeordnet ist.

Dadurch, das die 3 1/2 Zoll Laufwerke quer eingebaut sind verläuft das 3,5 Zoll Anschlußkabel für die Laufwerke parallel zur Seitenwandung des Computergehäuses an der Rückseite der Komponenten. Somit strömt der Kühlluftstrom nur auf eine schmale Längsseite des Anschlußkabels und nicht wie beim Einbau von der Frontseite auf die Breitseite des Anschlußkabels. Der Kühlluftstrom wird dadurch wesentlich weniger behindert, wodurch die Kühleffizienz steigt.

Zusätzlich befindet sich zwischen den 3 1/2"-Laufwerken und den Steckkarten ein Lüfter, der zusammen mit den beiden Lüftungsgittern an Front- und Rückseite für eine optimale Kühlung sorgt. Der Lüfter kann auch zwischen den 3 1/2"-Laufwerken und dem Lüftungsgitter an der Frontseite angeordnet sein.

Die Kühlung wird durch die Anordnung einer Trennwand aus Kunststoff, im weiteren Airshield genannt, die das Computergehäuse in einen oberen und einen unteren Bereiche abtrennt, erhöht. Das Airshield liegt parallel zu den Steckkarten und bildet zusammen mit den Lüftungsgittern an Front- und Rückseite einen Lüftungskanal über die ganze Länge des Computergehäuses.

Weitere Einzelheiten und Ausgestaltung der Erfindung sind in den Unteransprüchen angegeben.

Die Erfindung wird nachfolgend an einem Ausführungsbeispiel anhand der Zeichnungen näher erläutert.

In den Zeichnungen zeigen:
- Figur 1: eine Seitenansicht eines seitlich geöffneten Computergehäuses,
- Figur 2: eine Rückansicht des Computergehäuses gemäß Figur 1.

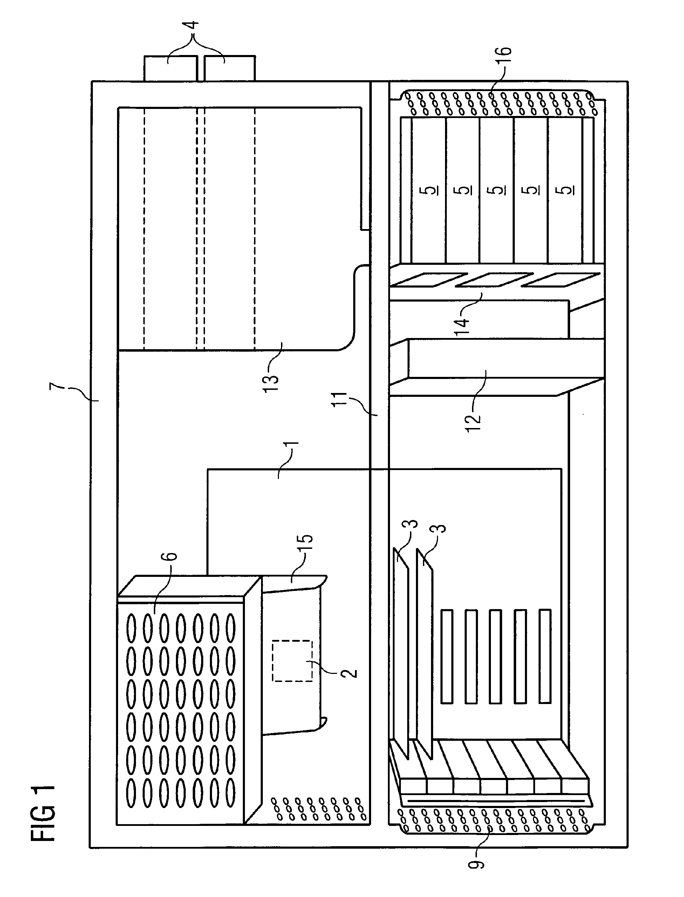

Figur 1 zeigt in Seitenansicht ein Computergehäuses 7, bei dem die Seitenwand abgenommen wurde. Im Computergehäuse 7 befindet sich oben hinter der Frontseite ein Einbaukäfig 13 für 5 1/4"-Laufwerke 4. Die 5 1/4"-Laufwerke 4 werden über die Frontseite des Computergehäuses 7 eingebaut und von der Frontseite aus bedient. Unterhalb des Einbaukäfigs 13 ist ein weiterer Einbaukäfig 14 für 3 1/2"-Laufwerke 5 vorgesehen. Die 3 1/2"-Laufwerke 5 werden bei abgenommener Seitenwandung quer in den Computer eingebaut. Durch diese Anordnung sind die 3 1/2"-Laufwerke 5 sehr platzsparend angeordnet, wodurch das Volumen des Computergehäuses bei Verwendung eines Standard ATX-Motherboards mit sieben PCI-Steckplätzen auf 36 Liter reduziert werden kann.

Im hinteren Bereich des Computergehäuses 7 befindet sich ein vertikal angeordnetes Motherboard 1, auf dessen oberer Hälfte ein Mikroprozessor 2 vorgesehen ist und in dessen unterer Hälfte Steckkarten 3 eingesteckt sind.

Das Computergehäuse 7 wird durch ein Airshield 11 in einen oberen und in einen unteren Bereich aufgeteilt. Das Airshield 11 erstreckt sich fast über die gesamte Breite des Computergehäuses 7 und von der Rückseite des Computergehäuses 7 bis zu den 3 1/2"-Laufwerken 5, bzw. bis zur Frontseite des Computers, wobei es zwischen den Einbaukäfigen 13 und 14 hindurch verläuft. Das Airshield 11 ist parallel zu den Steckkarten 3 angeordnet.

Das Airshield 11 bewirkt, daß die Wärme von den 3 1/2"-Laufwerken 5 in der Regel die Festplatten, nicht nach oben in den Bereich des Motherboards 1, wo der Prozessor 2 angeordnet ist strömen kann.

Oberhalb des Airshieldes 11 ist eine Stromversorgung 6 angeordnet, über welche der Prozessor 2 passiv gekühlt werden kann, indem eine Luftleithaube 15 die Stromversorgung 6 und den Prozessor 2 verbindet, so daß die Luftkühlung der Stromversorgung 6 für die Kühlung des Prozessors 2 genügt.

Unterhalb des Airshields zwischen den 3 1/2"-Laufwerken 5 und den Steckkarten 3 befindet sich ein Lüfter 12.

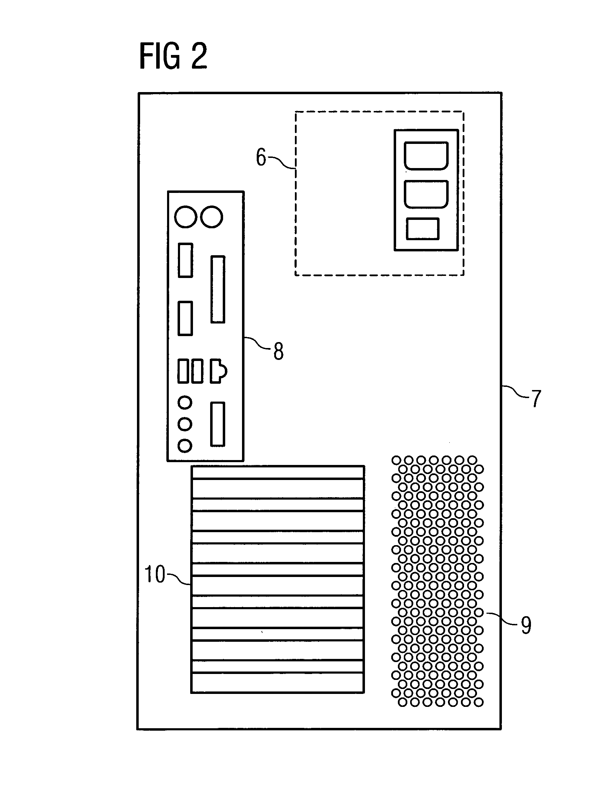

Figur 2 zeigt die Rückansicht eines Computergehäuses 7 mit einem Steckerfeld 8, einem I/O-Feld 10, einem Lüftungsgitter 9 und der Stromversorgung 6.

Die Vorderseite des Computergehäuses 7 weist auf gleicher Höhe wie die Rückseite ein Lüftungsgitter 16 (siehe Fig. 1) auf. Zusammen mit dem Lüftungsgitter 9 an der Rückseite, dem Airshield 11 und dem Lüfter 12 wird dadurch ein Kühlkanal gebildet, in welchem die 3 1/2"-Laufwerke und die Steckkarten 3 angeordnet sind.

Der Lüfter 12 kann auch zwischen Einbaukäfig 14 und Lüftungsgitter 16 angeordnet sein.

### Bezugszeichenliste

- 1: Motherboard
- 2: Mikroprozessor
- 3: Steckkarten
- 4: 5 1/4"-Laufwerke
- 5: 3 1/2"-Laufwerke
- 6: Stromversorgung
- 7: Computergehäuse
- 8: Steckerfeld
- 9: Lüftungsgitter
- 10: I/O-Feld
- 11: Airshield
- 12: Lüfter
- 13: Einbaukäfig für 5 1/4"-Laufwerke
- 14: Einbaukäfig für 3 1/2"-Laufwerke
- 15: Luftleithaube
- 16: Lüftungsgitter

## Patentansprüche

1. Aufbaukonzept für einen Tower-PC mit Motherboard (1), Mikroprozessor (2), Steckkarten (3), einem Einbaukäfig (14) für 3 1/2"-Laufwerke (5), einem Einbaukäfig (13) für 5 1/4"-Laufwerke (4) und einer Stromversorgung (6) in einem Computergehäuse (7),
**dadurch gekennzeichnet, daß**
der Einbaukäfig (14) für die 31/2"-Laufwerke (5) unter dem Einbaukäfig (13) für die 5 1/4"-Laufwerke (4) an der Frontseite quer zum oberen Einbaukäfig (13) angeordnet ist.

2. Aufbaukonzept nach Anspruch 1,
**dadurch gekennzeichnet, daß**
das Computergehäuse (7) an der Frontseite ein Lüftungsgitter (16) aufweist und an der Rückseite ein Lüftungsgitter (9) aufweist.

3. Aufbaukonzept nach Anspruch 1 oder 2,
**dadurch gekennzeichnet, daß**
zwischen dem Bereich des Computergehäuses (7), in dem die Stromversorgung (6) und der Mikroprozessor (2) angeordnet sind, und dem Bereich der für die Steckkarten (3) und den Einbaukäfig (14) für die 3 1/2"-Komponenten vorgesehen ist, ein Airshield (11) ausgebildet ist.

4. Aufbaukonzept nach einem der Ansprüche 1 bis 3,
**dadurch gekennzeichnet, daß**
zwischen den 3 1/2"-Laufwerken (5) und den Steckkarten (3) ein Lüfter (12) angeordnet ist.

5. Aufbaukonzept nach einem der Ansprüche 1 bis 4,
**dadurch gekennzeichnet, daß**
der Prozessor (2) passiv über eine Luftleithaube (15) durch die Stromversorgung (6) kühlbar ist.
